(19)

Europäisches
Patentamt
European
Patent Office
Office européen
des brevets

(11) **EP 2 124 408 A2**

(12) **EUROPEAN PATENT APPLICATION**

(43) Date of publication:
**25.11.2009 Bulletin 2009/48**

(51) Int Cl.:
**H04L 27/00** $^{(2006.01)}$

(21) Application number: **09006679.6**

(22) Date of filing: **18.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **19.05.2008 JP 2008130789**

(71) Applicant: **Nec Corporation**
**Tokyo 108-8001 (JP)**

(72) Inventors:
• **Tomokiyo, Ryo**
**Tokyo 108-8001 (JP)**

• **Iwasaki, Motoya**
**Tokyo 108-8001 (JP)**

(74) Representative: **Glawe, Delfs, Moll**
**Patent- und Rechtsanwälte**
**Postfach 26 01 62**
**80058 München (DE)**

Remarks:
A request for correction of the claims has been filed pursuant to Rule 139 EPC. A decision on the request will be taken during the proceedings before the Examining Division (Guidelines for Examination in the EPO, A-V, 3.).

(54)     **Radio communication unit and method for calculating frequency shift**

(57)     A radio communication unit includes: a reference-signal extraction section that extracts a phase of a reference signal from a baseband signal; a frequency-shift calculation section that calculates a phase shift of the received reference signal with respect to time, and calculates a frequency shift of the received carrier frequency; and an estimation-range decision section that determines, based on the calculated frequency shift, an estimation range used in the frequency-shift calculation section for estimating the frequency shift in a next slot.

FIG. 1

EP 2 124 408 A2

## Description

This application is based upon and claims the benefit of priority from Japanese patent application No. 2008-130789 filed on MAY 19, 2008, the disclosure of which is incorporated herein in its entirety by reference.

## TECHNICAL FIELD

The present invention relates to a radio communication unit and, more particularly, to a radio communication unit of a receiving side that receives a signal transmitted from a transmitting-side communication unit. The present invention also relates to a method for calculating a frequency shift and, more particularly, to a method and a program for calculating a frequency shift of a received carrier frequency received by the receiving-side communication unit with respect to a transmitted carrier frequency transmitted from the transmitting-side communication unit.

## BACKGROUND ART

There sometimes occurs a frequency shift (or frequency deviation) in a communication system between the transmitted carrier frequency transmitted from a mobile station and the received carrier frequency received by a base station. For example, assuming that the frequency shift between the mobile station and the base station is 1 kHz and the time slot length is 0.5 millisecond (ms), the phase of the received baseband signal is observed to be rotated by 180° (0.5ms×1kHz×360°) within a single time slot. The frequency shift causes degradation of the receiving characteristic during the phase judgment of the BPSK, QPSK etc. signals.

There is a technique for correcting the above frequency shift to improve the uplink receiving function of the base station side. AFC (automatic frequency control), is known as the technique for correcting the frequency shift on the receiving side. Typical techniques of the AFC include one wherein the base station observes the amount of phase change of the received signal corresponding to a known reference signal (pilot signal) transmitted from the mobile station at a regular interval, and provides the received signal with a phase rotation corresponding to the observed amount of the phase change, in the direction opposite to that of the phase change (for example, refer to JP-1998-155004A).

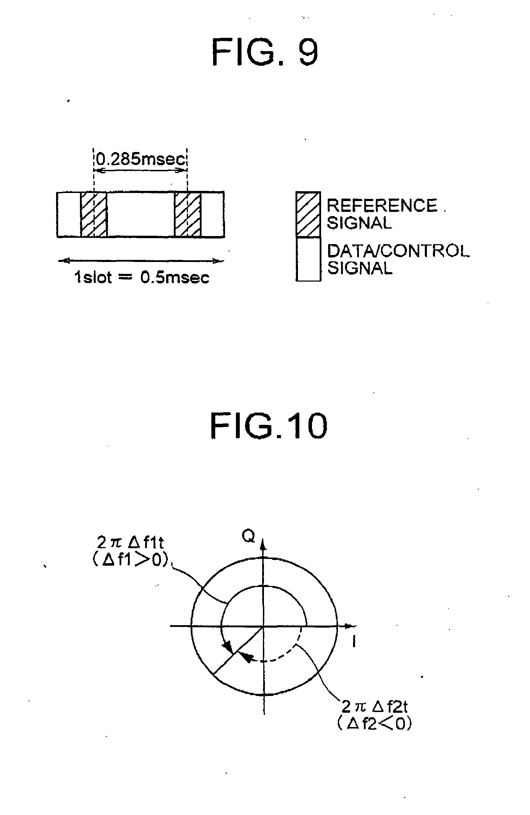

Assuming that the frequency shift between the base station and the mobile station is Δf (Hz), the phase of the received baseband signal is observed to be rotated by 2πft (radian or rad.) during a time interval "t". FIG. 9 shows an example of the configuration of a time slot, wherein a time interval of 0.285 ms exists between adjacent reference signals. In a communication system having the time slot as shown in FIG. 9, a frequency shift of 1750 Hz corresponds to a rotation of the phase by 360°×1750 Hz×0.285 ms=180° between the adjacent reference signals.

FIG. 10 exemplifies the phase difference between the adjacent reference signals. In the time slot having the configuration shown in FIG. 9, if the frequency shift exceeds 1750 Hz, the amount of phase change exceeds 180° to cause a phenomenon that a phase change of $2\pi \Delta f_1 t$ (radian; $\Delta f_1 > 0$) in the base station is observed as a phase change of $2\pi \Delta f_2 t$ ($\Delta f_2 < 0$) rotated in the opposite direction.

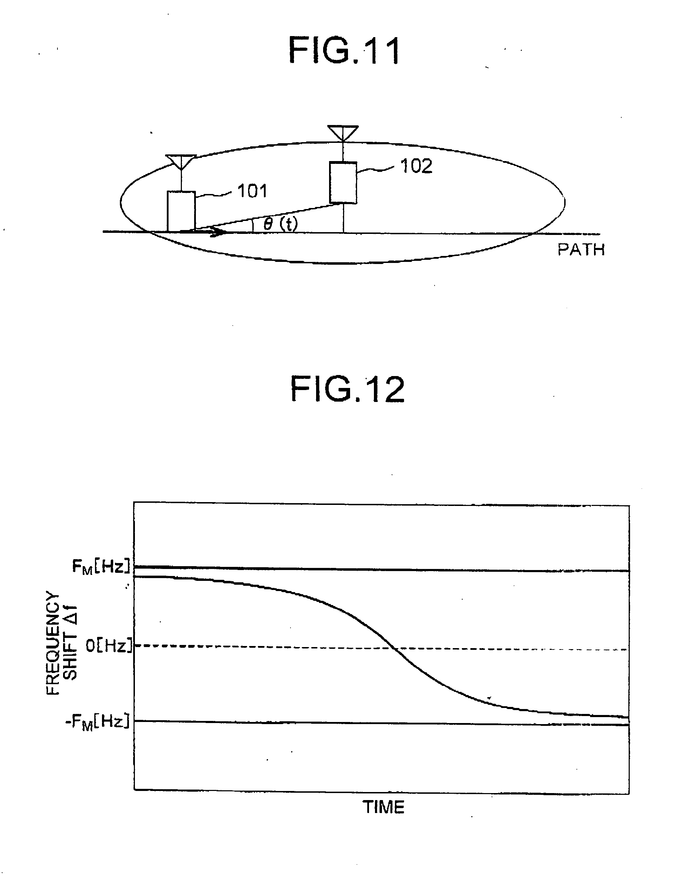

In the mobile radio communication system, movement of the mobile station causes a change of the frequency shift due to the Doppler shift of the frequency that is proportional to the movement speed. The Doppler shift will be described with reference to FIG. 11. It is assumed here that the mobile station 101 moves along the straight path shown in FIG. 11, and θ(t) denotes the angle between the straight line determined by the mobile station 101 and base station 102 and the straight path of the mobile station 101. In this case, the frequency shift Δf between the mobile station 101 and the base station 102 is expressed by

$$\Delta f = F_M \times \cos \theta \ (t) \qquad (1),$$

where $F_M$ is the maximum of the frequency shift that is proportional to the movement speed of the mobile station 101.

FIG. 12 shows the change of the frequency shift expressed by formula (1). When the mobile station 101 in FIG. 11 moves toward the base station 102, to cause the range of θ (t) changing between 0° and 90°, the frequency shift Δf gradually reduces from the $+F_M$. When θ (t) reaches 90°, the frequency shift Δf has a value of zero. When the mobile station 101 moves away from the base station 102 to cause the range of θ(t) changing between 90° and 180°, the absolute value of the frequency shift Δf gradually increases within the negative range thereof toward $-F_M$. The base station 102 provides a phase rotation corresponding to the phase deviation due to the Doppler shift to the received signal in the direction opposite to the direction of the phase change, thereby correcting the frequency shift of the received signal caused by the movement of the mobile station 101.

It is desired that a base station that covers an area or cell in which the mobile station moves at a high speed on the train, for example, estimate the frequency shift in a wider range thereof to correct the frequency shift, because the absolute value of the frequency shift changes in the wider range in such a case. However, as described before, if the phase shift exceeds 180°, the phase shift appears as the different phase shift of the opposite rotational direction, whereby it is impossible to estimate the frequency shift in such a wider range. As a result, there arises the problem that the base station cannot accurately correct the frequency shift.

## SUMMARY OF THE INVENTION

It is an object of the present invention to provide a radio communication unit, a method and a program for calculating the frequency shift, which are capable of estimating the frequency shift in wider range thereof.

The present invention provides a radio communication unit including: a demodulation section that receives in a receiving side a first signal including therein a reference signal and transmitted from a transmitting side, to demodulate the first signal to recover a baseband signal; a reference-signal extraction section that extracts a phase of the reference signal from the baseband signal; a frequency-shift calculation section that calculates a phase shift of the reference signal with respect to time, and calculates, based on the phase shift with respect to time, a frequency shift of a received carrier frequency received in the receiving side with respect to a transmitted carrier frequency transmitted from the transmitting side; and an estimation-range decision section that determines, based on the calculated frequency shift in a current slot, an estimation range used in the frequency-shift calculation section for estimating the frequency shift in a next slot.

The present invention also provides a method for calculating a frequency shift, including: receiving in a receiving side a first signal including therein a reference signal and transmitted from a transmitting side, to demodulate the first signal to recover a baseband signal; extracting a phase of the reference signal from the baseband signal; calculating a phase shift of the reference signal with respect to time, and calculating, based on the phase shift with respect to time, a frequency shift of a received carrier frequency received in the receiving side with respect to a transmitted carrier frequency transmitted from the transmitting side; and determining, based on the calculated frequency shift in the current slot, an estimation range used for estimating the frequency shift during the frequency shift calculating in a next slot.

The present invention further provides a computer-readable medium encoded with a program running on a computer, the program causing the computer to execute: receive in a receiving side a first signal including therein a reference signal and transmitted from a transmitting side, to demodulate the first signal to recover a baseband signal; extracting a phase of the reference signal from the baseband signal; calculate a phase shift of the reference signal with respect to time, and calculate, based on the phase shift with respect to time, a frequency shift of a received carrier frequency received in the receiving side with respect to a transmitted carrier frequency transmitted from the transmitting side; and determine, based on the calculated frequency shift in a current slot, an estimation range used for estimating the frequency shift during calculation of the frequency shift in a next slot.

The above and other objects, features and advantages of the present invention will be more apparent from the following description, referring to the accompanying drawings.

## BRIEF DESCRIPTION OF THE DRAWINGS

FIG. 1 is a block diagram showing a mobile communication system including a radio communication unit according to an embodiment of the present invention.
FIG. 2 is a diagram showing the relationship between the phase of the received reference signal and the amount of the phase shift of the received reference signal.
FIGS. 3A to 3C are exemplified diagrams each exemplifying the estimation range for the frequency shift.
FIG. 4 is a flowchart showing a procedure of determining the estimation range for the frequency shift.
FIG. 5 is a flowchart showing another procedure of determining the estimation range for the frequency shift.
FIG. 6 is a flowchart showing another procedure of determining the estimation range for the frequency shift.
FIG. 7 is a graph showing the change of frequency shift.
FIG. 8 is a graph showing the change of frequency shift of the received signal together with the estimation range for the frequency shift of the received signal.
FIG. 9 is a diagram exemplifying the configuration of a time slot.
FIG. 10 is a diagram showing the phase shift between adj acent time slots.
FIG. 11 is a schematic diagram showing the locational relationship between the mobile station and the base station.
FIG. 12 is a graph showing the change of the frequency shift of the received signal received in the base station shown in FIG. 11.

## DETAILED DESCRIPTION OF THE INVENTION

The radio communication unit of the present invention has a minimum configuration that includes: a demodulation section that receives in a receiving side a first signal including therein a reference signal and transmitted from a transmitting side, to demodulate the first signal to recover a baseband signal; a reference-signal extraction section that extracts a phase of the reference signal from the baseband signal; a frequency-shift calculation section that calculates a phase shift of the reference signal with respect to time, and calculates, based on the phase shift with respect to time, a frequency shift of a received carrier frequency received in the receiving side with respect to a. transmitted carrier frequency transmitted from the transmitting side; and an estimation-range decision section that determines, based on the calculated frequency shift in a current slot, an estimation range used in the frequency-shift calculation section for estimating the frequency shift in a next slot.

In accordance with the minimum configuration of the radio communication unit of the present invention, the estimation range for estimating the frequency shift can be enlarged due to the provision of the estimation-range decision section.

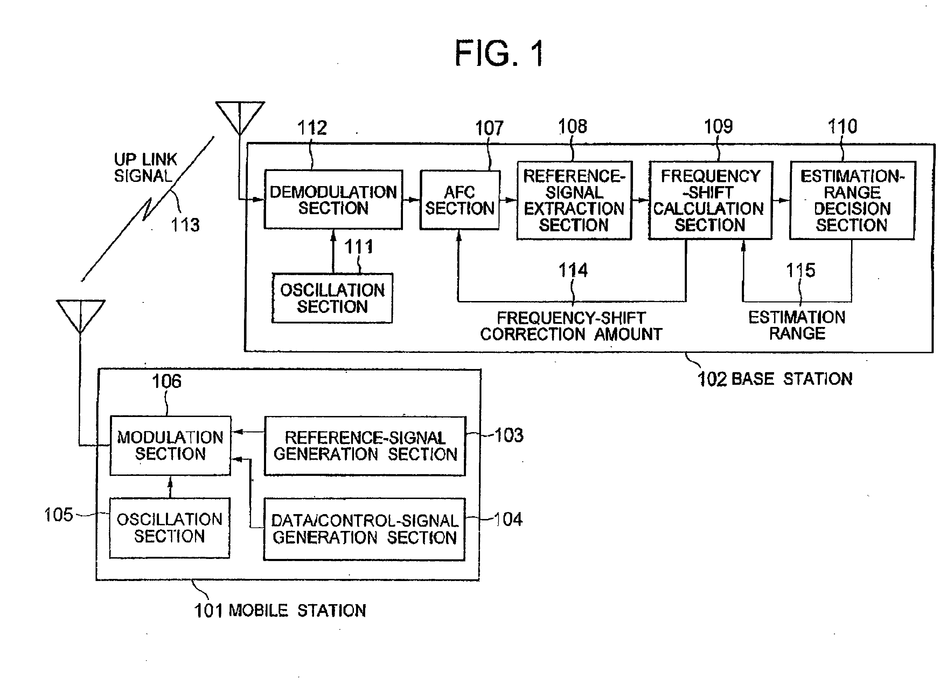

Now, the present invention will be described in more detail with reference to the accompanying drawings. FIG. 1 shows a mobile communication system including a radio communication unit according to an embodiment of the present invention. The mobile communication system includes a mobile station 101 and a radio base station 102. The radio base station 102 configures the radio communication unit of the present embodiment. In FIG. 1, although a single mobile station 101 and a single radio base station 102 are illustrated, the mobile communication system may include any number of mobile stations 101 and any number of radio base stations 102.

The mobile station 101 includes a reference-signal generation section 103, a data/control-signal generation section 104, an oscillation section 105, and a modulation section 106. The reference-signal generation section 103 generates a known reference signal. The data/control-signal generating section 104 generates a control signal and a data signal which are' transmitted to the base station 102. The modulation section 106 multiplexes the reference signal with the control signal/transmission data to generate a multiplexed signal, and modulates the carrier frequency generated by the oscillation section 105 with the multiplexed signal. The time slot of the uplink signal transmitted from the mobile station 101 to the base station 102 has a configuration such as shown in FIG. 9.

The base station 102 includes an AFC section 107, reference-signal extraction section 108, a frequency-shift calculation section 109, an estimation-range decision section 110, an oscillation section 111, and a demodulation section 112. The base station 102 receives the uplink signal 113 transmitted from the mobile station 101. The demodulation section 112 demodulates the uplink signal 113 by using the baseband signal having the frequency generated by the oscillation section 111. In this demodulation, the frequency shift $\Delta f$, which depends on the movement speed of the mobile station and phase shirt $\theta$ (t) between the mobile station 101 and the base station 102, as expressed by the formula (1), appears in the baseband signal. For the frequency shift $\Delta f$, the baseband signal appears to have a change of phase shift that is rotated by $2\pi \Delta f$ (rad.) during the time interval "t" between adjacent reference signals shown in FIG. 9.

The reference-signal extraction section 108 extracts the phase of the received reference signal from the received baseband signal corresponding to the known reference signal. The frequency-shift calculation section 109 calculates the change of phase shift of the received reference signal with respect to time based on the phase extracted by the reference-signal extraction section 108. The frequency-shift calculation section 109 calculates the frequency shift between the transmission carrier frequency transmitted from the mobile station 101 and the received carrier frequency received by the base station 102, based on the calculated phase shift. The estimation-range decision section 110 has a function of determining the estimation range for estimating the frequency shift in the received signal based on the phase shift delivered from the frequency-shift calculation section 109; to deliver the estimation-range signal 115 and thus notify the estimation range for the frequency shift to the frequency-shift calculation section 109. The frequency-shift calculation section 109 delivers a correction-amount signal 114 including information of the calculated frequency shift to the AFC section 107.

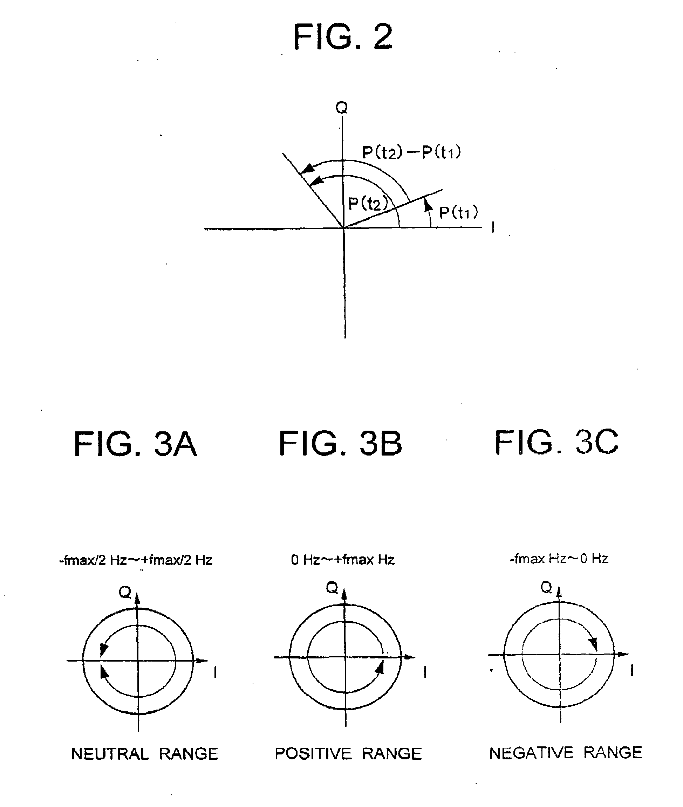

FIG. 2 shows the relationship between the phase of the received reference signal and the amount of phase shift of the received reference signal. In FIG. 2, the I-axis represents the in-phase of the transmitted reference signal, whereas the Q-axis represents the quadra-phase thereof. It is assumed here that P(t1) is the phase of the received reference signal extracted by the reference-signal extraction section 108 at time instant t1, and that P(t2) is the phase of the received reference signal received at time instant t2. The frequency-shift calculation section 109 calculates the change of the phase shift between the signal received at the time instant t1 and the signal received at the time instant t2, based on the difference between the phase P(t1) and the phase P(t2) extracted by the reference-signal extraction section 108. More specifically, the frequency-shift calculation section 109 calculates the change of phase shift "p", referred to also as merely phase shift hereinafter, from the formula p=P(t2)-P(t1). The frequency-shift calculation section 109 calculates the frequency shift $\Delta f$ (Hz) from the formula $\Delta f = p/(2 \pi t)$ where "p" is the phase shift amount and "t" is the time interval between the received reference signals.

The estimation-range decision section 110 determines the estimation range for estimating therein the frequency shift by using the time-dependent characteristic of the frequency shift, i.e., phase shift amount per unit time, calculated by the frequency-shift calculation section 109. More specifically, the estimation-range decision section 110 determines the estimation range for estimating the frequency shift in the next slot # (n+1) based on the current estimation range for estimating the frequency shift and the frequency shift in the current slot #n. The AFC section 107 performs correction of the frequency shift of the received baseband signal. The AFC section 107 rotates the phase of the received baseband signal in the opposite direction by the amount of frequency correction notified from the frequency-shift calculation section 109, to thereby correct the frequency shift.

The estimation-range decision section 110 selects one of the candidate estimation ranges stored in advance for estimating the frequency shift, the plurality of candidate estimation ranges having different configurations of the phase shift amount and frequency shift amount, as the estimation range for estimating the frequency shift in the frequency-shift calculation section 109. The plurality of candidate ranges for estimating the frequency shift may include, for example: a first range that is a neutral range and defines a frequency shift range between $f_1$ and $\Delta f_2$ ($\Delta f_2 > \Delta f_1$) for the phase shift range between p1 and p2 (p2>p1); a second range that is a positive range and defines a frequency shift range between $\Delta f_3$ and $\Delta f_4$ ($\Delta f_4 > \Delta f_3$, and $\Delta f_4 > \Delta f_2$) for the phase shift range between p3 and p4 (p4>p3, and p4>p2); a third range that is a negative range and defines a frequency shift range between $\Delta f_5$ and $\Delta f_6$ ($\Delta f_6 > \Delta f_5$, and $\Delta f_5 < \Delta f_1$) for the shift range between p5 and p6 (p6>p5, and p5<p1).

FIGS. 3A to 3C exemplifies the above candidate ranges for estimating the frequency shift. FIG. 3A shows the first estimation range, i.e., neutral range defining a frequency shift range of -fmax/2 to +fmax/2 (Hz) for a phase shift amount of $-\pi$ to $+\pi$ (rad.) where fmax is the maximum frequency shift that is determined by the configuration of the time slot and corresponds to a phase shift amount of $2\pi$. The frequency-shift calculation section 109 assumes the phase shift observed between $-\pi$ and $+\pi$ (rad.) as a frequency shift between -fmax/2 and +fmax/2 (Hz) for calculation when the estimation range for the frequency shift is the neutral range.

FIG. 3B shows the second estimation range, i.e. , positive range defining a frequency shift range of 0 to +fmax (Hz) for a phase shift amount of 0 to $2\pi$ (rad.). The frequency-shift calculation section 109 assumes the phase shift observed between 0 and $2\pi$ (rad.) as a frequency shift between 0 and +fmax (Hz) for calculation when the estimation range for the frequency is the positive range. FIG. 3C shows the third estimation range, i.e., negative range defining a frequency shift range of -fmax to 0 (Hz) for a phase shift amount of $-2\pi$ to 0 (rad.). The frequency-shift calculation section 109 assumes the phase shift observed between $-2\pi$ and 0 (rad.) as a frequency shift between -fmax and 0 for calculation when the estimation range for the frequency shift is the negative range.

The estimation-range decision section 110 switches the estimation range for the frequency shift depending on whether the frequency shift increases or decreases. For example, when the current estimation range for the frequency shift is neutral, the estimation range for the frequency shift is switched from the neutral range to the positive range, if the frequency shift in the current slot #n exceeds a first threshold and if it is predicted that the frequency shift in the next slot # (n+1) exceeds the frequency shift in the current slot #n. On the other hand, when the current estimation range for the frequency shift is positive, the estimation range for the frequency shift is switched from the positive range to the neutral range, if the frequency shift in the current slot #n is smaller than a second threshold and if it is predicted that the frequency shift in the next slot # (n+1) reduces from the frequency shift in the current slot #n.

When the current estimation range for the frequency shift is neutral, the estimation-range decision section 110 switches the estimation range for the frequency shift from the neutral, range to the negative range, if the frequency shift in the current slot #n exceeds a third threshold and if it is predicted that the frequency shift in the next slot #(n+1) reduces from the frequency shift in the current slot #n. In addition, when the current estimation range for the frequency shift is negative, the estimation-range decision section 110 switches the estimation range from the negative range to the neutral range, if the frequency shift in the current slot #n exceeds a fourth threshold and if it is predicted that the frequency shift in the next slot # (n+1) reduces from the frequency shift in the current slot #n.

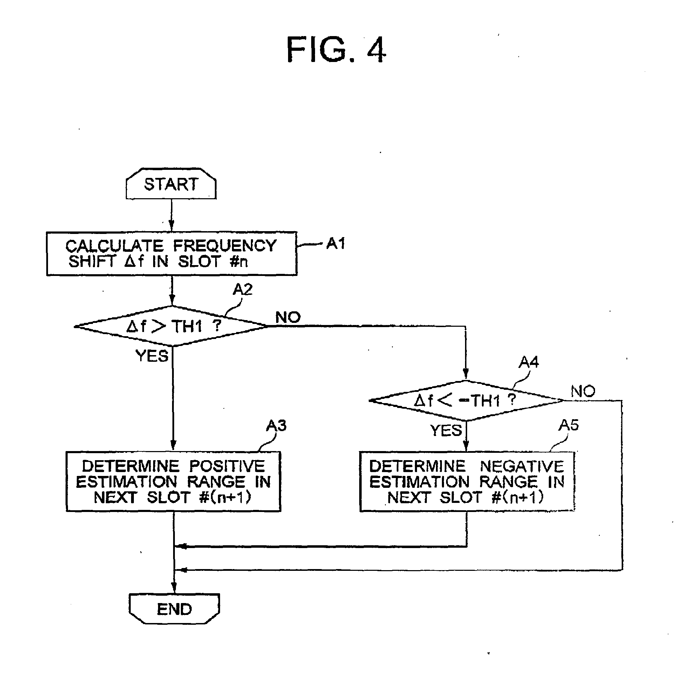

FIGS. 4 to 6 each show a flowchart of the procedure of determining the estimation range for the frequency shift. FIG. 4 shows the case where the estimation range for the frequency shift in the current slot #n is neutral. The frequency-shift calculation section 109 calculates the frequency shift $\Delta f$ in the current slot #n within the neutral range (step A1). The estimation-range decision section 110 compares the frequency shift $\Delta f$ calculated in step A1 against the first threshold TH1 (TH1>0), to judge whether or not the $\Delta f$ is larger than the first threshold TH1 (step A2).

The estimation-range decision section 110, upon judging that the $\Delta f$ exceeds the TH1, predicts that the sign of the frequency shift in the next slot #(n+1) does not change from the sign (plus) of the frequency shift in the current slot #n, to thereby switch the estimation range for the frequency shift from the neutral range to the positive range (step A3). The estimation-range decision section 110 notifies the frequency-shift calculation section 109 of the positive estimation range. The frequency-shift calculation section 109 calculates the frequency shift of the reference signal in the next slot #(n+1) within the positive estimation range for the frequency shift. In this way, the frequency shift in the next slot # (n+1) canbe correctly calculated, even if the frequency shift exceeds +fmax/2.

On the other hand, the estimation-range decision section 110, upon judging that the $\Delta f$ is smaller than the first threshold TH1 in step A2, further judges whether or not the $\Delta f$ is smaller than the third threshold, -TH1 (step A4). The estimation-range decision section 110, upon judging that the $\Delta f$ is smaller than the third threshold -TH1, predicts that the sign of the frequency shift in the next slot #(n+1) does not change from the sign (minus) of the frequency shift in the current slot #n, to thereby switch the estimation range from the neutral range to the negative range (step A5). The estimation-range decision section 110 notifies the frequency-shift calculation section 109 of the negative estimation range. The frequency-shift calculation section 109 calculates the frequency shift of the reference signal in the next slot #(n+1) within the negative estimation range for the frequency shift. In this way, the frequency shift in the next slot #(n+1) can be correctly calculated, even if the absolute value of the frequency shift exceeds |fmax/2|.

The estimation-range decision section 110, upon judging that the $\Delta f$ is smaller than the TH1 in step A2 and that the $\Delta f$ is larger than the -TH1 in step A4, i.e., that the relationship -TH1$\leq\Delta f\leq$TH1 satisfies, does not switch the estimation range for the frequency shift. In this case, the frequency-shift calculation section 109 calculates the frequency shift of the received reference frequency in the next slot #(n+1) within the neutral estimation range for the frequency shift, i.e., within the range of -fmax/2 to +fmax/2.

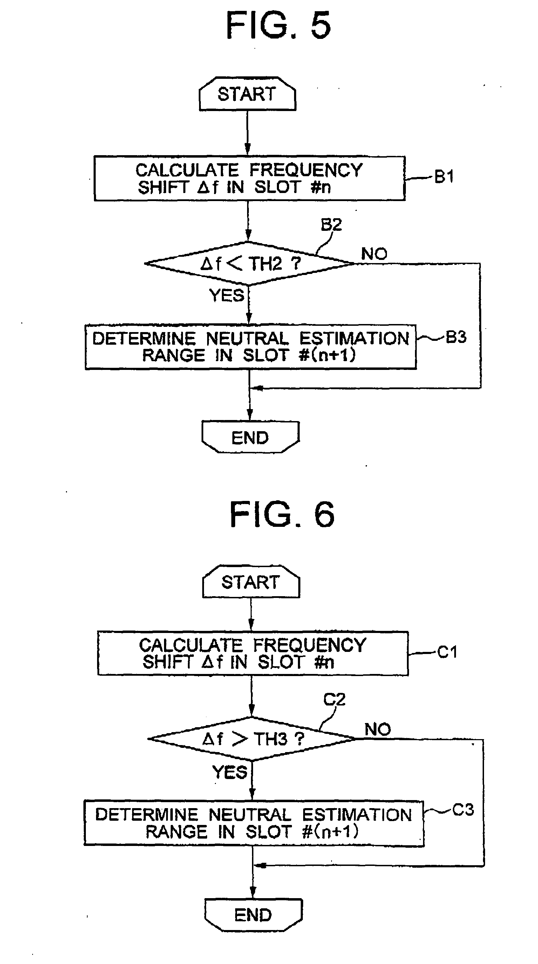

FIG. 5 shows the case where the estimation range for the frequency shift in the current slot #n is positive. The frequency-shift calculation section 109 calculates the frequency shift $\Delta t$ in the current slot #n within the positive range (step B1). The estimation-range decision section 110 compares the frequency shift $\Delta f$ calculated in step B1 against the second threshold TH2 (TH2>0), to judge whether or not the $\Delta f$ is smaller than the second threshold TH2 (step B2).

The estimation-range decision section 110, upon judging that the $\Delta f$ is smaller than the TH2, switches the estimation range for the frequency shift from the positive range to the neutral range (step B3). The estimation-range decision section 110 notifies the frequency-shift calculation section 109 of the neutral estimation range. The frequency-shift calculation section 109 calculates the frequency shift of the reference signal in the next slot #(n+1) within the neutral estimation range for the frequency shift. In this way, the frequency shift in the next slot #(n+1) can be correctly calculated, even if the frequency shift changes to the negative side.

On the other hand, the estimation-range decision section 110, upon judging that the $\Delta f$ is larger than the-second threshold TH2 in step B2, does not change the estimation range for the frequency shift. In this case, the frequency-shift calculation section 109 calculates the frequency shift of the reference signal in the next slot #(n+1) within the positive estimation range for the frequency shift.

FIG. 6 shows the case where the estimation range for the frequency shift in the current slot #n is negative. The frequency-shift calculation section 109 calculates the frequency shift $\Delta f$ in the current slot #n within the negative range (step C1). The estimation-range decision section 110 compares the frequency shift $\Delta f$ calculated in step C1 against the fourth threshold TH3 (TH3<0), to judge whether the $\Delta f$ is larger than the fourth threshold TH3 (step C2).

The estimation-range decision section 110, upon judging that the $\Delta f$ is larger than the TH3, switches the estimation range for the frequency shift from the negative range to the neutral range (step C3). The estimation-range decision section 110 notifies the frequency-shift calculation section 109 of the neutral estimation range. The frequency-shift calculation section 109 calculates the frequency shift of the reference signal in the next slot #(n+1) within the neutral estimation range for the frequency shift. In this way, the frequency shift in the next slot #(n+1) can be correctly calculated, even if the frequency shift changes to the positive side.

On the other hand, the estimation-range decision section 110, upon judging that the $\Delta f$ is smaller than the fourth threshold TH3 in step C2, does not change the estimation range for the frequency shift from the negative range. In this case, the frequency-shift calculation section 109 calculates the frequency shift of the reference signal in the next slot #(n+1) within the negative estimation range for the frequency shift.

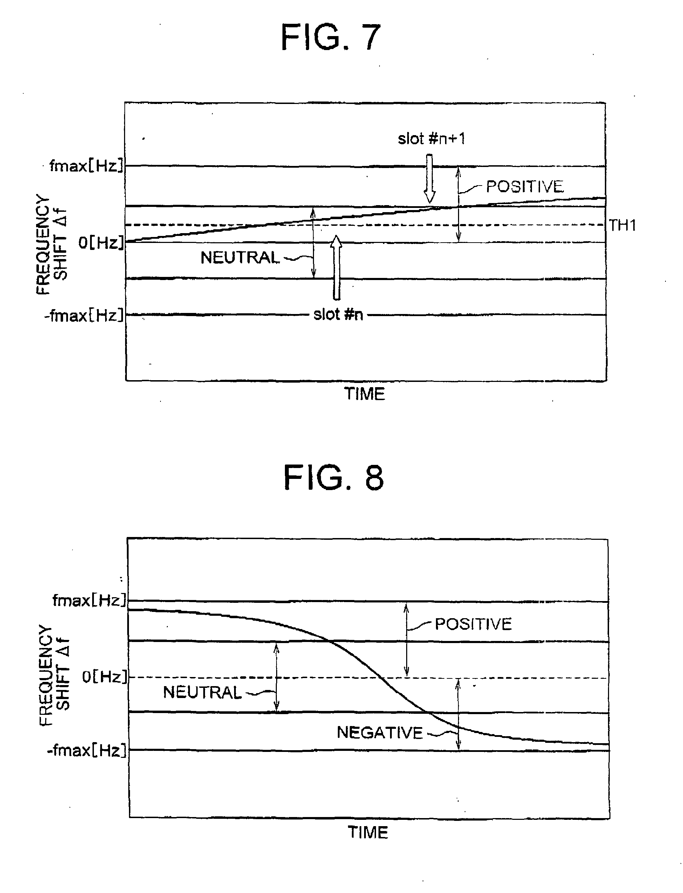

FIG. 7 shows an example of the change of frequency shift of the received signal. The estimation-range decision section 110 notifies the frequency-shift calculation section 109 of the neutral estimation range for the frequency shift. In this case, the frequency-shift calculation section 109 calculates the frequency shift within the range of -fmax/2 to +fmax/2 (Hz). If the frequency shift $\Delta f$ calculated by the frequency-shift calculation section 109 in the current slot #n exceeds the first threshold TH1, the estimation-range decision section 110 switches the estimation range for the frequency shift from the neutral range to the positive range. In the next slot t# (n+1), the frequency-shift calculation section 109 calculates the frequency shift of the received reference frequency in the next sloth #(n+1) within the range of 0 to +fmax (Hz).

It is assumed here, for example, that the frequency shift increases as shown in FIG. 7, and the amount of phase shift of the received reference signal exceeds +$\pi$ (rad.) as shown in FIG. 10. In this case, the estimation range for the frequency shift is switched from the neutral range to the positive range after the frequency shift exceeds the first threshold TH1. The frequency-shift calculation section 109 correctly recognizes the eventual phase shift, which may be observed as $2\pi \Delta f_2 t$ ($\Delta f_2 < 0$) in the opposite rotational direction if the estimation range for the frequency shift is negative, as a phase shift of $2\pi \Delta f_1 t (\Delta f_1 > 0)$. Thus, the frequency-shift calculation section 109 notifies the AFC section 107 of the frequency-shift correction amount 114 that is $\Delta f_1$, not $\Delta f_2$.

FIG. 8 shows the change of frequency shift of the received signal and the estimation ranges for the frequency shift. It is assumed here, as shown in FIG. 11, that the mobile station 101 moves along the straight path, and thus the frequency received by the base station 102 changes due to the Doppler shift. In the initial stage where the mobile station 101 moves toward the base station 102, the estimation-range decision section 110 determines the estimation range for the frequency shift as the positive range. The frequency-shift calculation section 109 calculates the frequency shift within the range of 0 to +fmax (Hz) based on the phase shift amount of the received reference signal.

When the mobile station 101 moves to the close proximity of the base station 102 to cause that the frequency shift is smaller than the second threshold TH2, the estimation-range decision section 110 switches the estimation range for the frequency shift from the positive range to the neutral range. The frequency-shift calculation section 109 calculates the frequency shift within the neutral range, i.e., the range of -fmax/2 to +fmax/2 (Hz), based on the phase shift amount of the received reference signal. When the mobile station 101 moves away from the proximity of the base station 102 to cause that the frequency shift is smaller than the -TH1, the estimation-range decision section 110 switches the estimation range for the frequency shift from the neutral range to the negative range. The frequency-shift calculation section 109 calculates the frequency shift within the range of 0 to -fmax (Hz) based on the of phase shift of the received reference signal.

In the present embodiment as described above, the demodulation section 112 demodulates the uplink signal from the mobile station 101 including the reference signal to recover the baseband signal, whereas the reference-signal extraction section 108 extracts the received phase of the reference signal from the baseband signal. The frequency-shift calculation section 109 recognizes the change of the phase shift of the extracted reference signal with respect to time. The estimation-range decision section 110 determines the estimation range for the frequency shift based on the change of the phase shift obtained by the frequency-shift calculation section 109. The frequency-shift calculation section 110 calculates, based on the estimation range for the frequency shift and the amount of the phase shift, the frequency shift of the received carrier frequency received in base station 102 with respect to the transmitted carrier frequency transmitted from the mobile station 101.

In the present embodiment, the estimation-range decision section 110 determines the estimation range for the frequency shift in the next slot by using the change characteristic of the phase shift of the received signal with respect to the time, which is obtained by the frequency-shift calculation section 109. The estimation-range decision section 110 expands the estimation range for the frequency shift in the direction for enlarging the frequency shift, when the calculated frequency shift is close to the maximum within the current estimation range for the frequency shift. On the other hand, the estimation-range decision section 110 expands the estimation range for the frequency shift in the direction of reducing the frequency shift, i.e., enlarging the frequency shift toward the negative side, when the frequency shift calculated is close to the minimum within the current range for the frequency shift.

In present embodiment, the estimation range for the frequency shift is switched, whereby a correct frequency shift can be calculated even if the phase shift of the reference signal changes in a wider range exceeding the absolute value of $\pm 180°$ In other words, the present embodiment achieves calculation of the frequency shift in a wider range of change of the received signal. This provides the advantage that the base station 102 can calculate the correct frequency shift that changes in wider range due to the Doppler shift, as in the case where the base station 102 receives a signal from the mobile station 101 that moves at a higher speed. In addition, the receiving characteristic of the received signal from the mobile station 101 can be improved by performing the phase shift correction based on the frequency shift thus obtained.

In the above embodiment, reception of the uplink signal in the base station 102 is exemplified; however, the present invention may be applied to reception of the downlink signal in the mobile station 101. More specifically, the mobile station 101 may include the AFC section 107, reference-signal extraction section 108, frequency-shift calculation section 109, estimation-range decision section 110 etc. such as described above. The mobile station 101 having this configuration can operate similarly to the above embodiment, to thereby calculate the frequency shift of the downlink signal received from the base station 102. Although the above embodiment is such that the estimation range for the frequency shift in the next slot #(n+1) is calculated from the frequency shift in the current slot #n, the estimation range for the frequency shift in the subsequent slot or slots may be determined based on the frequency shift in a plurality of slots.

The threshold TH1 used for switching of the estimation range for the frequency shift from the neutral range to the positive range may be same as or different from the threshold TH2 used for switching of the estimation range for the frequency shift from the positive range to the neutral range. The threshold -TH1 used for switching the estimation range for the frequency shift from the neutral range to the negative range may be same as or different from the threshold TH3 used for switching the estimation range for the frequency shift from the negative range to the neutral range. Similarly, the absolute value of the threshold used for switching the estimation range for the frequency shift from the neutral range to the positive range may be same as or different from the absolute value of the threshold used for switching the estimation range from the neutral range to the negative range.

While the invention has been particularly shown and described with reference to exemplary embodiment thereof, the invention is not limited to these embodiments and modifications. As will be apparent to those of ordinary skill in the art, various changes may be made in the invention without departing from the spirit and scope of the invention as defined in the appended claims.

**Claims**

1. A radio communication unit comprising:

   a demodulation section that receives in a receiving side a first signal including therein a reference signal and transmitted from a transmitting side, to demodulate said first signal to recover a baseband signal;

a reference-signal extraction section that extracts a phase of said reference signal from said baseband signal;

a frequency-shift calculation section that calculates a phase shift of said reference signal with respect to time, and calculates, based on said phase shift with respect to time, a frequency shift of a received carrier frequency received in said receiving side with respect to a transmitted carrier frequency transmitted from said transmitting side; and

an estimation-range decision section that determines, based on said calculated frequency shift in a current slot, an estimation range used in said frequency-shift calculation section for estimating said frequency shift in a next slot.

2. The radio communication unit according to claim 1, wherein said frequency-shift calculation section calculates said frequency shift $\Delta f$ (Hz) by using the following formula:

$$\Delta f = p/(2 \pi t),$$

wherein "p" and "t" are said phase shift (radian) of said reference signal and a time interval of reception of said reference signal, respectively.

3. The radio communication unit according to claim 1, wherein said estimation-range decision section determines said estimation range by selecting one of a plurality of candidate estimation ranges overlapping one another.

4. The radio communication unit according to claim 3, wherein said candidate estimation ranges include a first candidate estimation range between $\Delta f1$ (Hz) and $\Delta f2$ (Hz) where $\Delta f2 > \Delta f1$ for a range of said phase shift between p1 (radian) and p2 (radian) where p2>p1.

5. The radio communication unit according to claim 4, wherein said candidate estimation ranges include a second candidate estimation range between $\Delta f3$ (Hz) and $\Delta f4$ (Hz), where $\Delta f4 > \Delta f3$ and $\Delta f4 > \Delta f2$, for a range of said phase shift between p3 (radian) and p4 (radian) where p4>p3, and p4>p2.

6. The radio communication unit according to claim 5, wherein said estimation-range decision section selects said second candidate estimation range in said next slot, if in said current slot said frequency-shift calculation section estimates said frequency shift within said first candidate estimation range and said frequency shift calculated by said frequency-shift calculation section is larger than a first threshold.

7. The radio communication unit according to claim 5, wherein estimation-range decision section selects said first candidate estimation range in said next slot, if in said current slot said frequency-shift calculation section estimates said frequency shift within said second candidate estimation range and said frequency shift calculated by said frequency-shift calculation section is smaller than a second threshold.

8. The radio communication unit according to claim 5, wherein said candidate estimation ranges further include a third candidate estimation range between $\Delta f5$ (Hz) and $\Delta f6$ (Hz), where $\Delta f6 > \Delta f5$ and $\Delta f5 < \Delta f1$, for a range of said phase shi ft between p5 (radian) and p6 (radian) where p6>p5 and p5<p1.

9. The radio communication unit according to claim 8, therein said estimation-range decision section selects said third candidate estimation range in said next slot, if in said current slot said frequency-shift calculation section estimates said frequency shift within said first candidate estimation range and said frequency shift calculated by said frequency-shift calculation section is smaller than a third threshold.

10. The radio communication unit according to claim 5, wherein said estimation-range decision section selects said first candidate estimation range in said next slot, if in a current slot said frequency-shift calculation section estimates said frequency shift within said third candidate estimation range and said frequency shift calculated by said frequency-shift calculation section is larger than a fourth threshold.

11. A method for calculating a frequency shift, comprising:

receiving in a receiving side a first signal including therein a reference signal and transmitted from a transmitting side, to demodulate said first signal to recover a baseband signal;

extracting a phase of said reference signal from said baseband signal;

calculating a phase shift of said reference signal with respect to time, and calculating, based on said phase shift with respect to time, a frequency shift of a received carrier frequency received in said receiving side with respect to a transmitted carrier frequency transmitted from said transmitting side; and

determining, based on said calculated frequency shift in said current slot, an estimation range used for estimating said frequency shift during said frequency shift calculating in a next slot.

**12.** The method according to claim 11, wherein said estimation range determining includes selecting one of a plurality of candidate estimation ranges overlapping one another

**13.** The method according to claim 13, wherein said candidate estimation ranges include a first candidate estimation range between $\Delta f1$ (Hz) and $\Delta f2$ (Hz) where $\Delta f2 > \Delta f1$ for a range of said phase shift between p1 (radian) and p2 (radian) where p2>p1

**14.** The method according to claim 14, wherein said candidate estimation ranges include a second candidate estimation range between $\Delta f3$ (Hz) and $\Delta f4$ (Hz), where $\Delta f4 > \Delta f3$ and $\Delta f4 > \Delta f2$, for a range of said phase shift between p3 (radian) and p4 (radian) where p4>p3, and p4>p2.

**15.** The method according to claim 15, wherein said candidate estimation ranges further include a third candidate estimation range between $\Delta f5$ (Hz) and $\Delta f6$ (Hz), where $\Delta f6 > \Delta f5$ and $\Delta f5 < \Delta f1$, for a range of said phase shift between p5 (radian) and p6 (radian) where p6>p5 and p5<p1.

**16.** A computer-readable medium encoded with a program running on a computer, said program causing said computer to execute:

receive in a receiving side a first signal including therein a reference signal and transmitted from a transmitting side, to demodulate said first signal to recover a baseband signal;
extracting a phase of said reference signal from said baseband signal;
calculate a phase shift of said reference signal with respect to time, and calculate, based on said phase shift with respect to time, a frequency shift of a received carrier frequency received in said receiving side with respect to a transmitted carrier frequency transmitted from said transmitting side; and
determine, based on said calculated frequency shift in a current slot, an estimation range used for estimating said frequency shift during calculation of said frequency shift in a next slot.

# FIG. 1

UP LINK SIGNAL

113

112 · 107 108 109 110

DEMODULATION SECTION → AFC SECTION → REFERENCE-SIGNAL EXTRACTION SECTION → FREQUENCY-SHIFT CALCULATION SECTION → ESTIMATION-RANGE DECISION SECTION

111

OSCILLATION SECTION

114

FREQUENCY-SHIFT CORRECTION AMOUNT

115

ESTIMATION RANGE

102 BASE STATION

106

MODULATION SECTION ← REFERENCE-SIGNAL GENERATION SECTION ～103

105～ OSCILLATION SECTION

DATA/CONTROL-SIGNAL GENERATION SECTION ～104

101 MOBILE STATION

EP 2 124 408 A2

# FIG. 2

# FIG. 3A    FIG. 3B    FIG. 3C

-fmax/2 Hz~+fmax/2 Hz        0 Hz~+fmax Hz        -fmax Hz~0 Hz

NEUTRAL RANGE        POSITIVE RANGE        NEGATIVE RANGE

# FIG. 4

```
          ┌──────────┐
          │  START   │
          └────┬─────┘
               │
     ┌─────────▼──────────┐
     │ CALCULATE FREQUENCY │───A1
     │  SHIFT Δf IN SLOT #n │
     └─────────┬──────────┘
               │        A2
          ◇────▼────◇         NO
         ◇  Δf > TH1 ? ◇──────────────────┐
          ◇─────────◇                     │
            YES │                         │
                │                    A4   │
                │              ◇──────────▼────◇   NO
                │             ◇  Δf < −TH1 ?  ◇────────┐
                │              ◇──────────────◇        │
                │                    YES │        A5   │
          A3    │                        │             │
     ┌──────────▼────────┐     ┌─────────▼─────────┐   │
     │ DETERMINE POSITIVE │     │ DETERMINE NEGATIVE │   │
     │ ESTIMATION RANGE IN │     │ ESTIMATION RANGE IN │   │
     │  NEXT SLOT #(n+1)   │     │  NEXT SLOT #(n+1)   │   │
     └──────────┬────────┘     └─────────┬─────────┘   │
                │◄───────────────────────┘             │
                │◄─────────────────────────────────────┘
          ┌─────▼────┐
          │   END    │
          └──────────┘
```

# FIG. 5

```
        ┌──────────┐
        │  START   │
        └────┬─────┘
             │
             ▼
   ┌─────────────────────────┐
   │  CALCULATE  FREQUENCY   │── B1
   │   SHIFT Δf IN  SLOT #n   │
   └────────────┬────────────┘
                │
                ▼         B2
          ◇─────────────◇      NO
          <  Δf < TH2 ?  >──────────────┐
          ◇─────────────◇               │
                │ YES                    │
                ▼                        │
   ┌─────────────────────────┐── B3     │
   │ DETERMINE  NEUTRAL  ESTIMATION │    │
   │   RANGE  IN  SLOT  #(n+1)  │        │
   └────────────┬────────────┘          │
                │◄───────────────────────┘
                ▼
        ┌──────────┐
        │   END    │
        └──────────┘
```

# FIG. 6

```
        ┌──────────┐
        │  START   │
        └────┬─────┘
             │
             ▼
   ┌─────────────────────────┐
   │  CALCULATE  FREQUENCY   │── C1
   │   SHIFT Δf IN  SLOT #n   │
   └────────────┬────────────┘
                │
                ▼         C2
          ◇─────────────◇      NO
          <  Δf > TH3 ?  >──────────────┐
          ◇─────────────◇               │
                │ YES                    │
                ▼                        │
   ┌─────────────────────────┐── C3     │
   │ DETERMINE  NEUTRAL  ESTIMATION │    │
   │   RANGE  IN  SLOT  #(n+1)  │        │
   └────────────┬────────────┘          │
                │◄───────────────────────┘
                ▼
        ┌──────────┐
        │   END    │
        └──────────┘
```

# FIG. 7

# FIG. 8

# FIG. 9

0.285msec

REFERENCE SIGNAL

DATA/CONTROL SIGNAL

1slot = 0.5msec

# FIG.10

$2\pi\Delta f1t$
$(\Delta f1 > 0)$

Q

I

$2\pi\Delta f2t$
$(\Delta f2 < 0)$

# FIG.11

# FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008130789 A
- JP 10155004 A